# EUROPEAN PATENT APPLICATION

(11) **EP 4 748 630 A1**
(43) Date of publication of application: **27.05.2026**
(21) Application number: 23848239.2
(22) Date of filing: 24.08.2023
(51) Int. Cl.: B60L 53/62, B60L 53/31

(54) **THREE-PHASE BALANCING AND POWER ADJUSTING CIRCUIT DESIGN FOR THREE-PHASE ALTERNATING CURRENT CHARGING PILE**

(30) Priority: 18.07.2023 CN 202310878595
(71) Applicant: Xiaofeng New Energy Vehicle Charging Technology (Suzhou) Co., Ltd., Suzhou City, Jiangsu Province (CN)
(72) Inventor: YANG, Tao, Suzhou, Jiangsu 215000 (CN); ZHANG, Zilong, Suzhou, Jiangsu 215000 (CN)
(74) Representative: Cabinet Chaillot
(86) International application number: PCT/CN2023/114707
(87) International publication number: WO 2025/015664

(57) **Abstract**

Disclosed is a design of a three-phase balanced power distribution circuit for a three-phase AC charging pile, relating to the field of electric vehicle charging, which comprises an IT grounding system, a TN grounding system, a power distribution function relay, and a main relay. The IT grounding system is provided with incoming ports L1, L2, and L3, and the TN grounding system is provided with incoming ports N, L1, L2, L3, and PE. The invention is provided with a power distribution function relay and a main relay. The power distribution function relay only has an off-load switching function, so the performance requirements for the relay are lower than those for the main relay. The cost of the relay can be greatly reduced, and the main relay will be used in load switching scenarios, so the performance requirements of the main relay are higher.

## Description

### 1. Technical Field

The invention relates to the field of electric vehicle charging, specifically to a design of a three-phase balanced power distribution circuit for a three-phase AC charging pile.

### 2. Background Art

The electric vehicle industry is developing rapidly. As the number of users purchasing electric vehicles increases, public supporting charging station resources are in short supply. More and more users will install charging piles at home. Most of the AC charging piles used by ordinary households are single-phase AC charging piles. Some households also purchase three-phase AC charging piles. Conventional three-phase AC charging piles do not have a three-phase balanced power distribution function.

The most commonly used electric vehicle charging piles at present are single-phase AC charging piles, and single-phase AC charging piles are fixedly connected to one of the three-phase power when the charging pile is first installed; although conventional three-phase AC piles are connected to three-phase power at the same time during installation, since there is no three-phase balancing and power distribution circuit inside, especially in the single-phase charging mode, a single-phase power that cannot be switched freely is actually used. The above charging methods will cause the problem of three-phase imbalance, and the single-phase charging method will bring a great burden to the three-phase AC power grid.

### 3. Summary of the Invention

The purpose of the invention is to use this dual-contact type main relay as the switch of the main circuit, and provide a design of a three-phase balanced power distribution circuit for a three-phase AC charging pile that is compatible with both three-phase charging application scenarios and single-phase charging application scenarios: when only closing K1, it works in the single-phase charging mode; when closing K1 and K2 at the same time, it can work in the three-phase charging mode.

In order to achieve the above purpose, the invention provides the following technical solutions: a use this dual-contact type main relay as the switch of the main circuit,

Preferably, the IT grounding system is provided with incoming ports L1, L2, and L3, and the TN grounding system is provided with incoming ports N, L1, L2, L3, and PE.

Preferably, the power distribution function relay is provided with K4, K5, K6, K7, and K8, and the main relay is provided with K1 and K2; the power distribution function relay adopts a single-channel contact type relay, and the main relay adopts a dual-channel contact type relay.

Preferably, the input and output contacts of the power distribution function relay K4 are respectively connected to the input contacts of the incoming port L1 and the second main contact of the main relay K1, and the output contacts of K4 is also connected to the output contacts of the power distribution function relays K5 and K6.

Preferably, the input and output contacts of the power distribution function relay K5 are respectively connected to the input contacts of the incoming port L2 and the second main contact of the main relay K1, and the output contacts of K5 is also connected to the output contacts of the power distribution function relays K4 and K6.

Preferably, the input and output contacts of the power distribution function relay K6 are respectively connected to the input contacts of the incoming port L3 and the second main contact of the main relay K1, and the output contacts of K6 are also connected to the output contacts of the power distribution function relays K4 and K5.

Preferably, the input and the output contacts of the power distribution function relay K7 are respectively connected to the input contacts of the incoming port L1 and the first main contact of the main relay K1, and the output contacts of K7 is also connected to the output contacts of the power distribution function relay K8.

Preferably, the input and output contacts of the power distribution function relay K8 are respectively connected to the input contacts of the incoming port N and the first main contact of the main relay K1, and the output contacts of K8 is also connected to the output contacts of the power distribution function relay K7.

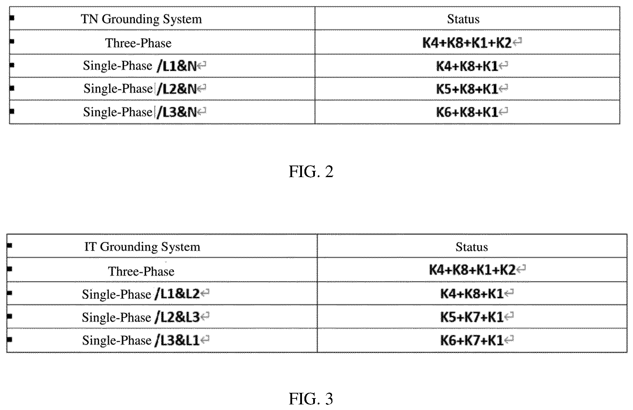

Preferably, it includes the following application scenarios:
scenario 1: in the TN grounding system, as shown in FIG. 2, closing K4, K8, K1, and K2 at the same time can achieve normal three-phase charging function; when the system detects three-phase unbalance and needs to adjust power, it firstly disconnects all relays K4, K8, K1, and K2, and then determines the current power distribution to L1, or L2, or L3 and continues to charge the electric vehicle in single-phase charging mode based on the current three-phase unbalanced situation and a certain algorithm; for example, if the load of L1 in the current system is light, the system will first close K4 and K8; when it detects that the status of the power distribution function relay is already state, it will close K1 alone, thereby realizing single-phase charging of the electric vehicle through L1; for example, if the load of L2 in the current system is light, the system will first close K5 and K8; when it detects that the status of the power distribution function relay is already state, it will close K1 alone, thereby realizing single-phase charging of the electric vehicle through L2; for example, if the load of L3 in the current system is light, the system will first close K6 and K8; when it detects that the status of the power distribution function relay is already state, it will close K1 alone, thereby realizing single-phase charging of the electric vehicle through L3;
scenario 2: in the IT grounding system, as shown in FIG. 3, closing K4, K8, K1, and K2 at the same time can achieve normal three-phase charging function; when the system detects three-phase unbalance and needs to adjust power, it firstly disconnects all relays K4, K8, K1, and K2, and then determines the current power distribution to L1 and L2, or L2 and L3, or L3 and L1, and continues to charge the electric vehicle in single-phase charging mode based on the current three-phase unbalanced situation and a certain algorithm; for example, if the loads of L1 and L2 of the current system are light, the system will first close K4 and K8; when it is detected that the status of the power distribution function relay is already state, it will close K1 alone, thereby realizing single-phase charging of the electric vehicle through L1 and L2; for example, if the loads of L2 and L3 of the current system are light, the system will first close K5 and K7; when it is detected that the status of the power distribution function relay is already state, it will close K1 alone, thereby realizing single-phase charging of the electric vehicle through L2 and L3; for example, if the loads of L3 and L1 of the current system are light, the system will first close K6 and K7; when it detects that the status of the power distribution function relay is already state, it will close K1 alone, thereby realizing single-phase charging of the electric vehicle through L3 and L1.

Compared with the prior art, the invention is provided with a power distribution function relay and a main relay. The power distribution function relay only has an off-load switching function, so the performance requirements for the relay are lower than those for the main relay. The cost of the relay can be greatly reduced, and the main relay will be used in load switching scenarios, so the performance requirements of the main relay are higher. According to relevant standards, the contact gap of the main relay is required to be greater than or equal to 3.0 mm, and the electrical life needs to meet the life requirements of the rated current load switch of 50,000 times, etc. Moreover, the two main relays in the invention preferably adopt dual-contact types, which can simplify the complexity and cost of circuit design. It is precisely because this dual-contact type main relay is used as the switch of the main circuit that is compatible with both three-phase charging application scenarios and single-phase charging application scenarios: when only closing K1, it works in the single-phase charging mode; when closing K1 and K2 at the same time, it can work in the three-phase charging mode.

### 4. Brief Description of the Drawings

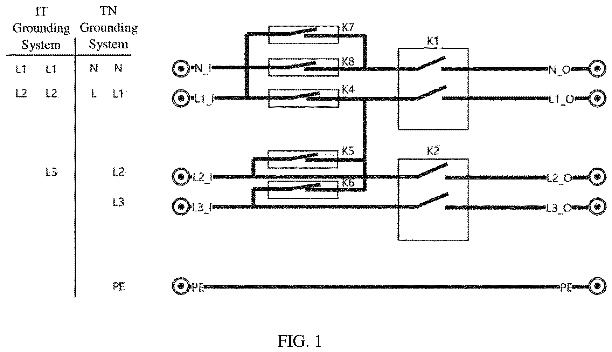

FIG. 1 is a schematic diagram of the system according to the invention;
FIG. 2 is a three-phase and single-phase power distribution status table of the TN grounding system according to the invention;
FIG. 3 is a three-phase and single-phase power distribution status table of the IT grounding system according to the invention;

### 5. Specific Embodiment of the Invention

In order to make the objectives, technical solutions, and advantages of the embodiments of the invention clearer, the technical solutions in the embodiments of the invention will be described clearly and completely hereinafter with reference to the drawings in the embodiments of the invention. Obviously, the described embodiments are part of the embodiments of the invention, rather than all of the embodiments. The components of the embodiments of the invention generally described and illustrated in the drawings herein may be arranged and designed in various different configurations.

In order to achieve the above purpose, the invention provides a design of a three-phase balanced power distribution circuit for a three-phase AC charging pile, wherein the three-phase balanced power distribution circuit design comprising an IT grounding system, a TN grounding system, a power distribution function relay, and a main relay.

The IT grounding system is provided with incoming ports L1, L2, and L3, and the TN grounding system is provided with incoming ports N, L1, L2, L3, and PE.

The power distribution function relay is provided with K4, K5, K6, K7, and K8, and the main relay is provided with K1 and K2; the power distribution function relay adopts a single-channel contact type relay, and the main relay adopts a dual-channel contact type relay.

The input and output contacts of the power distribution function relay K4 are respectively connected to the input contacts of the incoming port L1 and the second main contact of the main relay K1, and the output contacts of K4 is also connected to the output contacts of the power distribution function relays K5 and K6.

The input and output contacts of the power distribution function relay K5 are respectively connected to the input contacts of the incoming port L2 and the second main contact of the main relay K1, and the output contacts of K5 is also connected to the output contacts of the power distribution function relays K4 and K6.

The input and output contacts of the power distribution function relay K6 are respectively connected to the input contacts of the incoming port L3 and the second main contact of the main relay K1, and the output contacts of K6 are also connected to the output contacts of the power distribution function relays K4 and K5.

The input and the output contacts of the power distribution function relay K7 are respectively connected to the input contacts of the incoming port L1 and the first main contact of the main relay K1, and the output contacts of K7 is also connected to the output contacts of the power distribution function relay K8.

The input and output contacts of the power distribution function relay K8 are respectively connected to the input contacts of the incoming port N and the first main contact of the main relay K1, and the output contacts of K8 is also connected to the output contacts of the power distribution function relay K7.

Scenario 1: in the TN grounding system, as shown in FIG. 2, closing K4, K8, K1, and K2 at the same time can achieve normal three-phase charging function; when the system detects three-phase unbalance and needs to adjust power, it firstly disconnects all relays K4, K8, K1, and K2, and then determines the current power distribution to L1, or L2, or L3 and continues to charge the electric vehicle in single-phase charging mode based on the current three-phase unbalanced situation and a certain algorithm; for example, if the load of L1 in the current system is light, the system will first close K4 and K8; when it detects that the status of the power distribution function relay is already state, it will close K1 alone, thereby realizing single-phase charging of the electric vehicle through L1; for example, if the load of L2 in the current system is light, the system will first close K5 and K8; when it detects that the status of the power distribution function relay is already state, it will close K1 alone, thereby realizing single-phase charging of the electric vehicle through L2; for example, if the load of L3 in the current system is light, the system will first close K6 and K8; when it detects that the status of the power distribution function relay is already state, it will close K1 alone, thereby realizing single-phase charging of the electric vehicle through L3.

Scenario 2: in the IT grounding system, as shown in FIG. 3, closing K4, K8, K1, and K2 at the same time can achieve normal three-phase charging function; when the system detects three-phase unbalance and needs to adjust power, it firstly disconnects all relays K4, K8, K1, and K2, and then determines the current power distribution to L1 and L2, or L2 and L3, or L3 and L1, and continues to charge the electric vehicle in single-phase charging mode based on the current three-phase unbalanced situation and a certain algorithm; for example, if the loads of L1 and L2 of the current system are light, the system will first close K4 and K8; when it is detected that the status of the power distribution function relay is already state, it will close K1 alone, thereby realizing single-phase charging of the electric vehicle through L1 and L2; for example, if the loads of L2 and L3 of the current system are light, the system will first close K5 and K7; when it is detected that the status of the power distribution function relay is already state, it will close K1 alone, thereby realizing single-phase charging of the electric vehicle through L2 and L3; for example, if the loads of L3 and L1 of the current system are light, the system will first close K6 and K7; when it detects that the status of the power distribution function relay is already state, it will close K1 alone, thereby realizing single-phase charging of the electric vehicle through L3 and L1.

The power distribution function relay in the invention only has an off-load switching function, so the performance requirements for the relay are lower than those for the main relay. The cost of the relay can be greatly reduced, and the main relay will be used in load switching scenarios, so the performance requirements of the main relay are higher. According to relevant standards, the contact gap of the main relay is required to be greater than or equal to 3.0 mm, and the electrical life needs to meet the life requirements of the rated current load switch of 50,000 times, etc. Moreover, the two main relays in the invention preferably adopt dual-contact types, which can simplify the complexity and cost of circuit design. It is precisely because this dual-contact type main relay is used as the switch of the main circuit that is compatible with both three-phase charging application scenarios and single-phase charging application scenarios: when only closing K1, it works in the single-phase charging mode; when closing K1 and K2 at the same time, it can work in the three-phase charging mode.

The invention and the embodiments thereof are described hereinabove, and this description is not restrictive. What is shown in the drawings is only one of the embodiments of the invention, and the actual structure is not limited thereto. All in all, structural methods and embodiments similar to the technical solution without deviating from the purpose of the invention made by those of ordinary skill in the art without creative design shall all fall within the protection scope of the invention.

## Claims

1. A design of a three-phase balanced power distribution circuit for a three-phase AC charging pile, wherein the three-phase balanced power distribution circuit design comprising an IT grounding system, a TN grounding system, a power distribution function relay, and a main relay.

2. The design of a three-phase balanced power distribution circuit for a three-phase AC charging pile of Claim 1, wherein the IT grounding system is provided with incoming ports L1, L2, and L3, and the TN grounding system is provided with incoming ports N, L1, L2, L3, and PE.

3. The design of a three-phase balanced power distribution circuit for a three-phase AC charging pile of Claim 1, wherein the power distribution function relay is provided with K4, K5, K6, K7, and K8, and the main relay is provided with K1 and K2; the power distribution function relay adopts a single-channel contact type relay, and the main relay adopts a dual-channel contact type relay.

4. The design of a three-phase balanced power distribution circuit for a three-phase AC charging pile of Claim 1, wherein the input and output contacts of the power distribution function relay K4 are respectively connected to the input contacts of the incoming port L1 and the second main contact of the main relay K1, and the output contacts of K4 is also connected to the output contacts of the power distribution function relays K5 and K6.

5. The design of a three-phase balanced power distribution circuit for a three-phase AC charging pile of Claim 1, wherein the input and output contacts of the power distribution function relay K5 are respectively connected to the input contacts of the incoming port L2 and the second main contact of the main relay K1, and the output contacts of K5 is also connected to the output contacts of the power distribution function relays K4 and K6.

6. The design of a three-phase balanced power distribution circuit for a three-phase AC charging pile of Claim 1, wherein the input and output contacts of the power distribution function relay K6 are respectively connected to the input contacts of the incoming port L3 and the second main contact of the main relay K1, and the output contacts of K6 are also connected to the output contacts of the power distribution function relays K4 and K5.

7. The design of a three-phase balanced power distribution circuit for a three-phase AC charging pile of Claim 1, wherein the input and the output contacts of the power distribution function relay K7 are respectively connected to the input contacts of the incoming port L1 and the first main contact of the main relay K1, and the output contacts of K7 is also connected to the output contacts of the power distribution function relay K8.

8. The design of a three-phase balanced power distribution circuit for a three-phase AC charging pile of Claim 1, wherein the input and output contacts of the power distribution function relay K8 are respectively connected to the input contacts of the incoming port N and the first main contact of the main relay K1, and the output contacts of K8 is also connected to the output contacts of the power distribution function relay K7.

9. The design of a three-phase balanced power distribution circuit for a three-phase AC charging pile of Claim 1, including the following application scenarios:
scenario 1: in the TN grounding system, as shown in FIG. 2, closing K4, K8, K1, and K2 at the same time can achieve normal three-phase charging function; when the system detects three-phase unbalance and needs to adjust power, it firstly disconnects all relays K4, K8, K1, and K2, and then determines the current power distribution to L1, or L2, or L3 and continues to charge the electric vehicle in single-phase charging mode based on the current three-phase unbalanced situation and a certain algorithm; for example, if the load of L1 in the current system is light, the system will first close K4 and K8; when it detects that the status of the power distribution function relay is already state, it will close K1 alone, thereby realizing single-phase charging of the electric vehicle through L1; for example, if the load of L2 in the current system is light, the system will first close K5 and K8; when it detects that the status of the power distribution function relay is already state, it will close K1 alone, thereby realizing single-phase charging of the electric vehicle through L2; for example, if the load of L3 in the current system is light, the system will first close K6 and K8; when it detects that the status of the power distribution function relay is already state, it will close K1 alone, thereby realizing single-phase charging of the electric vehicle through L3;
scenario 2: in the IT grounding system, as shown in FIG. 3, closing K4, K8, K1, and K2 at the same time can achieve normal three-phase charging function; when the system detects three-phase unbalance and needs to adjust power, it firstly disconnects all relays K4, K8, K1, and K2, and then determines the current power distribution to L1 and L2, or L2 and L3, or L3 and L1, and continues to charge the electric vehicle in single-phase charging mode based on the current three-phase unbalanced situation and a certain algorithm; for example, if the loads of L1 and L2 of the current system are light, the system will first close K4 and K8; when it is detected that the status of the power distribution function relay is already state, it will close K1 alone, thereby realizing single-phase charging of the electric vehicle through L1 and L2; for example, if the loads of L2 and L3 of the current system are light, the system will first close K5 and K7; when it is detected that the status of the power distribution function relay is already state, it will close K1 alone, thereby realizing single-phase charging of the electric vehicle through L2 and L3; for example, if the loads of L3 and L1 of the current system are light, the system will first close K6 and K7; when it detects that the status of the power distribution function relay is already state, it will close K1 alone, thereby realizing single-phase charging of the electric vehicle through L3 and L1.
